# EUROPEAN PATENT APPLICATION

(11) **EP 0 573 136 A1**
(43) Date of publication of application: **08.12.1993**
(21) Application number: 93300879.9
(22) Date of filing: 05.02.1993
(51) Int. Cl.: G06K 11/16

(54) **Cordless digitizer with sync signal generator**

(30) Priority: 01.06.1992 US 891768
(71) Applicant: SUMMAGRAPHICS CORPORATION, Seymour, CT 06483 (US)
(72) Inventor: Barbetti, James L., Milford Connecticut 06770 (US); Lasley, Daniel G., Newtown Connecticut 06470 (US); McDermott, Robert M., Weston Connecticut 06883 (US)
(74) Representative: Hackett, Sean James

(57) **Abstract**

A pointing device driven digitizer tablet using a cordless pointing device and requiring a sync signal coordinated with the driving of the pointing device. The sync signal is derived from signals induced in a conductor of one grid or one of the X and Y grids, while the location determining signals are being derived from another conductor of the same grid or the other of the Y and X grids.

## Description

This invention relates to digitizer tablets, and in particular to cordless digitizer tablets which require a sync pulse for proper operation.

### Background Of Invention

Digitizing tablets are known which use sync pulses as references to optimize performance. Several such digitizer types are described and illustrated in commonly-assigned U.S. Patent Nos. 4,952,757 and 4,990,726. These are of the electromagnetic type, and their cursor is pulsed at regular intervals, and following each pulse one of the conductors of the tablet grid is connected to a signal processing system to determine the magnitude or phase of the signal voltage induced therein. To determine the proper time to scan each conductor of the grid, a signal is derived from the circuitry generating the cursor pulses. This signal, known as the sync signal, is easily generated and used to control the scanning circuits when the cursor is physically wired to the tablet.

In other types of digitizer tablets described and illustrated in commonly-assigned U.S. Patent Nos. 4,996,393 and 5,066,833, a sync pulse is also generated when the cursor is pulsed for the purpose of controlling sample and hold circuits (S/H) for sampling the induced signals in the grid conductors at an optimum time to reduce noise and interference. Again, no particular problem is entailed in generating the sync signal when the pointing device is physically wired to the tablet.

A problem does arise, however, when a cordless pointing device is used, because the pointing device circuitry is physically isolated from the tablet signal processing circuitry. Hence, it is difficult to generate in the tablet a sync signal properly timed with respect to the timing of the pointing device driving pulses.

U.S. Patent No. 4,795,858 describes obtaining reference phase pulses from a signal induced in an additional auxiliary or third grid provided in the tablet grid structure.

### Summary Of Invention

An object of the invention is an improved digitizer tablet construction employing a cordless pointing device and of the type requiring a reference or sync signal for proper processing of the induced signals representing location of the pointing device.

In accordance with one aspect of the present invention, in a digitizer tablet of the type employing a grid system made up of active conductors that can be selectively connected to a location detector using a sync signal for determining the location of a pointing device, the sync signal used in the location detector at any particular point in time is derived from an active grid conductor other than the grid conductor actually connected to the location detector at the same point in time. The underlying concept is based on the recognition that the pulsing of the pointing device induces signals in each of the active conductors of the grid system. Location signals are derived by connecting individual conductors to the location detector, and, in the usual way, the magnitude of the location signals can be used to determine the pointing device location, the largest magnitude signals generally being induced in the conductors closest to the pointing device. But, since, in general, only one or a few active conductors at a time are connected to the detector, the other non-connected active conductors will also have signals induced therein, and these signals can be used as the sync pulse since they are generated by the same pointing device pulse. To implement this aspect of the invention, appropriate selection circuitry is provided under the control of a microprocessor so that the sync signal processing circuit will always be connected to a grid conductor different from the grid conductor then connected to the location signal processing circuit. This implementation contemplates grid systems employing a one-dimensional grid, as well as two or more dimensional grids.

In accordance with another aspect of the invention, in a digitizer tablet of the type described employing X and Y grid structures for determining the X-Y coordinates of the pointing device, a conductor of one of the X and Y grids is used as the source of the sync signal when a conductor of the other grid is used to obtain the pointing device location signal. This arrangement has the advantage that it is easier to pick the conductor with the strongest signal to use as the sync signal without being concerned that that same conductor happens then to be used for coordinate determination, since the respective conductors are on different grids, and, conventionally, the different grids are scanned at different times. The sync signal is preferably chosen as the strongest signal for maximum noise immunity.

An advantage of the invention is that no additional grid structures are necessary, and the circuitry to generate the sync signal is relatively simple and inexpensive to implement.

These and further objects and advantages of the invention will be best understood in connection with the detailed description that follows of several embodiments of the invention, taken in conjunction with the accompanying drawings.

### Summary Of Drawings

In the drawings:
Fig. 1 is a block diagram of one form of digitizer in accordance with the invention;
Fig. 2 is a circuit schematic of certain details of the digitizer of Fig. 1;
Fig. 3 is a circuit schematic of a modification of the circuit of Fig. 2;
Fig. 4 is a block diagram of a digitizer system using synchronous demodulation employing the sync signal derived from the X or Y grid;
Fig. 5 is a schematic circuit showing, in part, implementation of the system of Fig. 4;
Figs. 6 and 7 are waveforms illustrating preferred ways of selecting conductors for deriving the sync signal;
Fig. 8 is a block diagram illustrating schematically a preferred digitizer system providing sync signal selection to increase signal intensity.

### Detailed Description Of Preferred Embodiments

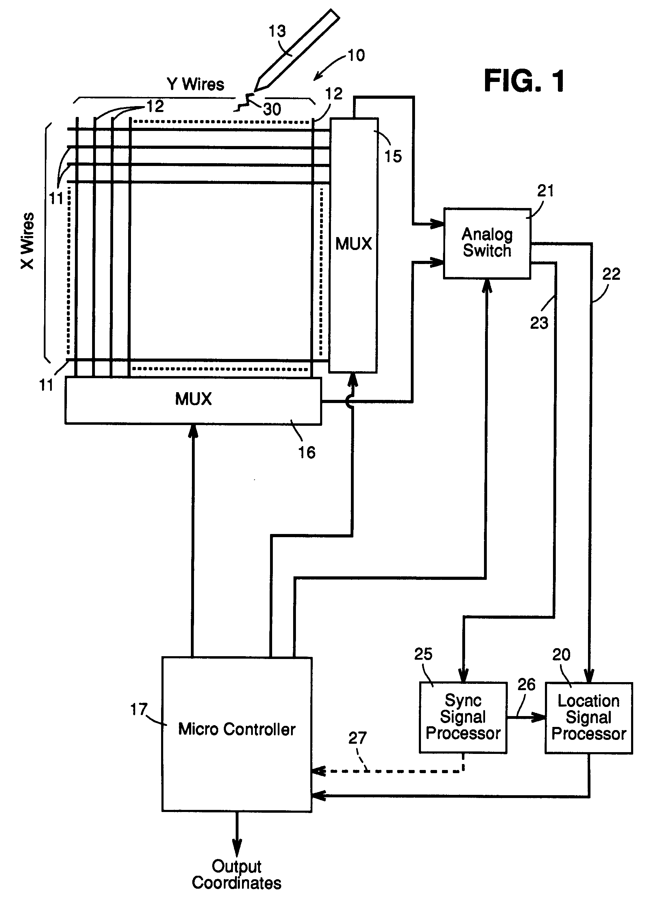

Fig. 1 is a block diagram illustrating features common to many conventional digitizer tablets, including those described in the referenced patents and patent application. Those tablets comprise a console unit 10 in whose surface is embedded a two-dimensional arrangement of X and Y grid systems comprising, respectively, a plurality of parallel X wires 11 and orthogonal Y wires 12. A cordless pointing device illustrated as a stylus is shown at 13.

The stylus 13 typically would contain an oscillator connected to an antenna powered by an internal battery. for an electromagnetic (EM) type of digitizer, the antenna would typically be a coil at the stylus tip. For an electrostatic type of digitizer, the antenna would be a conductive tip. Each of the conductor sets would be connected to a multiplexer 15, 16 in turn connected to and controlled by a microcontroller 17. The outputs from the multiplexers would conventionally be connected to location signal processing circuitry 20.

In accordance with the invention, however, the multiplexers 15, 16 are connected to an analog switch 21 in turn connected to and controlled by the microcontroller 17.

The analog switch 21 is essentially a double pole, double throw switch that has two outputs 22, 23, the first 22 of which is connected to the location signal processor 20, and the second 23 of which is connected to a sync signal processor 25. The output of the latter can be connected as shown by the solid line 26 to the location signal processor 20, or as shown by the dashed line 27 to the microcontroller 17. The output of the location signal processor is fed to the microcontroller 17 which ultimately outputs the X-Y coordinates of the stylus 13.

In operation, the user activates the stylus 13 when over the console unit 10 generating a series of pulsed waves 30, which induce signals in both the X and Y conductor wires extending underneath or in the vicinity of the stylus radiator. The microcontroller 17 is programmed to send control signals to the two multiplexers 15, 16 and analog switches 21 to do the following:
1. During one time interval, the X wires 11 are scanned in a particular order and the induced signals forwarded to the location signal processor 20;
2. While the X wires are scanned, the signals induced in the Y wires, singly or jointly, are forwarded to the sync signal processor 25. The latter occur at the same time that the location signals are generated. Hence, there now exists a signal which is properly timed with respect to the location signals that can be used as described in the referenced patents and application as the required sync signal;
3. When the X wire scanning is completed, during another time interval, the Y wires 12 are scanned, the analog switch 21 being switched to now feed the Y location signals to the location signal processor 21;
4. Simultaneously, the signals induced on the X wires 11 are forwarded to the sync signal processor 25.

Thus, without the addition of additional or auxiliary grids, one axis of the tablet is used as a source for the sync signal when the other axis is used for cursor location, with their roles being reversed to obtain the second cursor coordinate.

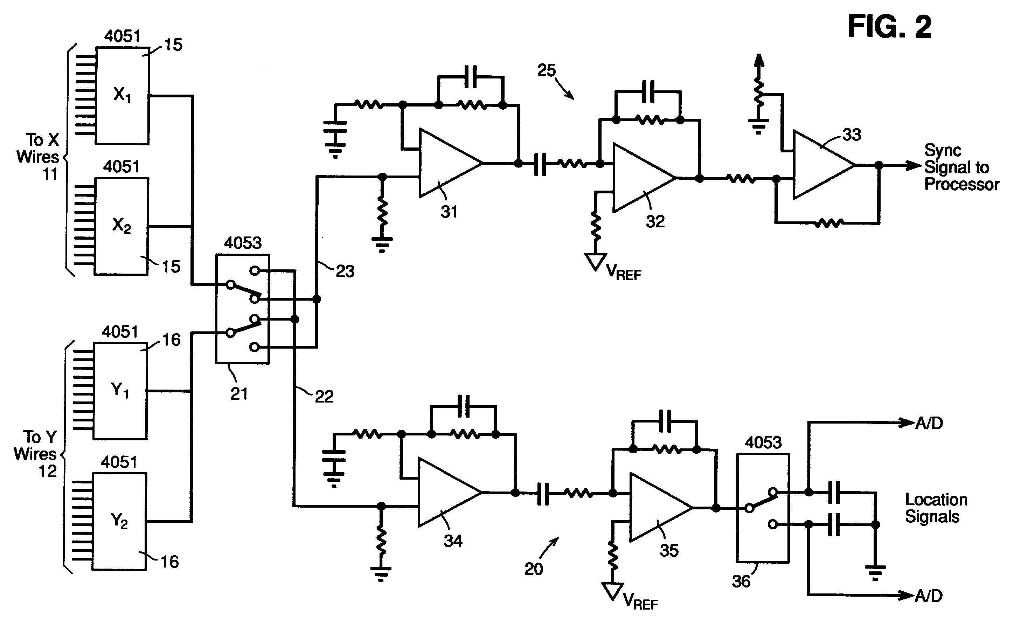

Fig. 2 illustrates some details of representative circuitry that can be used, most of which are well known to those skilled in this art and need not be described in any detail. The multiplexers 15, 16 are shown as 4051 chips, and the analog switch 21 as a 4053 chip. The control signals from the microcontroller 17 are not shown.

The signal processors for the sync and location signals as shown are illustrated with conventional OP AMPS 31, 32, 33, 34, 35. The block 36 represents another 4053 analog switch which, again controlled by the microcontroller which is not shown, samples the location signals at its positive and negative peaks for improved noise immunity. The signals are then passed on to the usual A/D convertors and processed in the normal way to produce the location information.

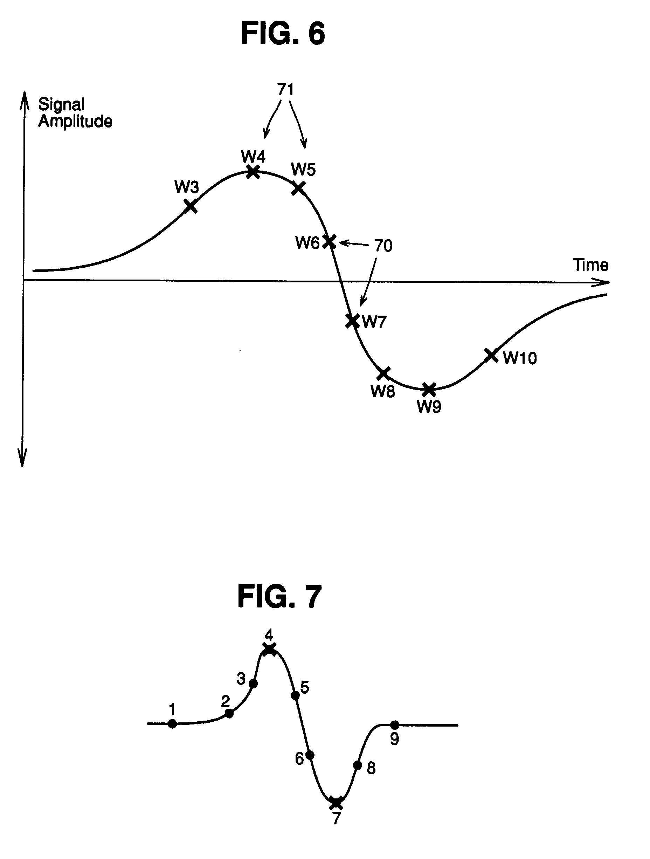

There are various ways in which the sync conductors, i.e., the conductors from which the sync signals are obtained, can be chosen, elaborated on later in connection with Figs. 6-8. If the signal levels are sufficiently high, then any one grid conductor can be used to provide the sync signal. Alternatively, all of the grid conductors can be connected together by the multiplexer and switches --taking into account inverting polarities where the signals are reversed-- to provide a reinforced higher signal level. Or, a group of such conductors, smaller than the total number, can be used to supply the sync signal.

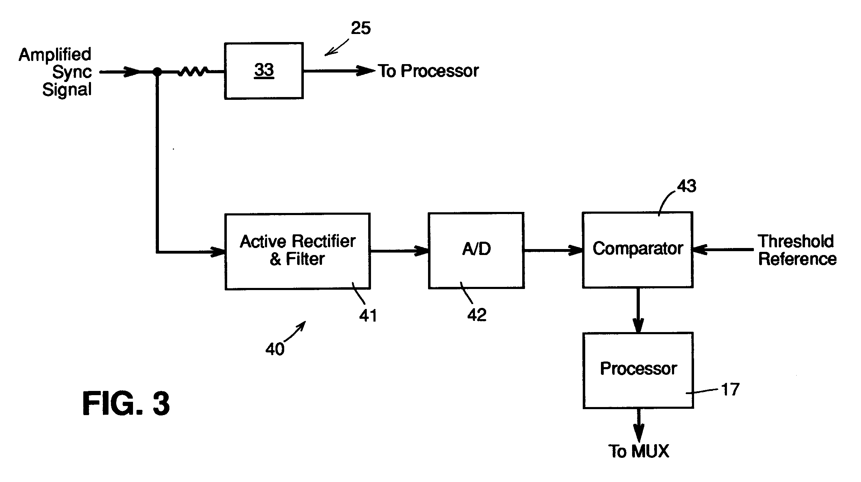

Fig. 3 shows a modified circuit which allows for switching to another conductor should the signal level fall below a threshold value. The circuit is similar to the upper branch 25 of the circuit shown in Fig. 2, showing in this case the amplifier 33 as a block just before outputting the sync signal to the microcontroller 17 or processor. In this modification, the signal is tapped off to a third branch 40, where it is fed to a conventional rectifier and filter section 41, resulting in a D.C. level proportional to the amplitude as well as to the phase of the incoming sync signal. This D.C. level is then fed to an A/D converter 42 producing a digital value representative of the D.C. level. This digital value can be compared 43 against a predetermined threshold level. The results would be forwarded to the processor 17. The latter is programmed to control the MUX selecting the sync conductor such that, so long as the D.C. level remains above the threshold, the same sync conductor or conductors is used to supply the sync signal. Should the D.C. level fall below the threshold, the processor would be programmed to direct the MUX to select another sync conductor or conductors until the sync signal level has been raised to an acceptable value.

The generated sync signal, delayed if necessary, is used as previously described to determine the proper time to scan the X or Y wires, or for control of the S/H circuitry, or for any other purpose where it is necessary to coordinate the cursor pulses with the signal processing.

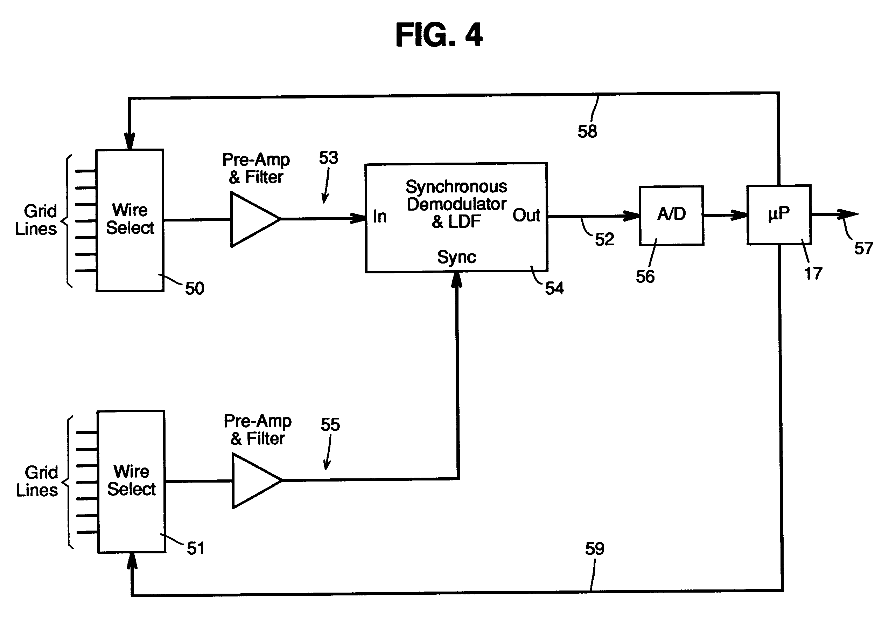

Fig. 4 shows one way of using the sync signal for synchronous demodulation of the cursor position signals. The wire select and sync select blocks 50, 51 correspond to the MUX's 15 and 16 of Fig. 1. The location signal is processed in the upper branch 53 and inputted to the synchronous demodulator 54. The sync signal is processed in the lower branch 55 and inputted to the synchronous demodulator 54 which, as described in the commonly-assigned cases, is used to sample the analog location signal at the optimum time to maximize the S/N ratio. The output at line 52 will be a D.C. level indicative of the amplitude and phase of the location signal induced in the selected grid line relative to that of the sync signal. The output via line 52 is then processed by the usual A/D converter 56, and in turn the resultant value fed to the IP 17, which, after the usual processing outputs 57 the coordinate. The IP 17 also supplies via line 58 the wire select signal to the MUX 50 for the next scan of one of the grids, and a wire select signal via line 59 to select which grid line or lines of the other grid will be used to supply the sync signal.

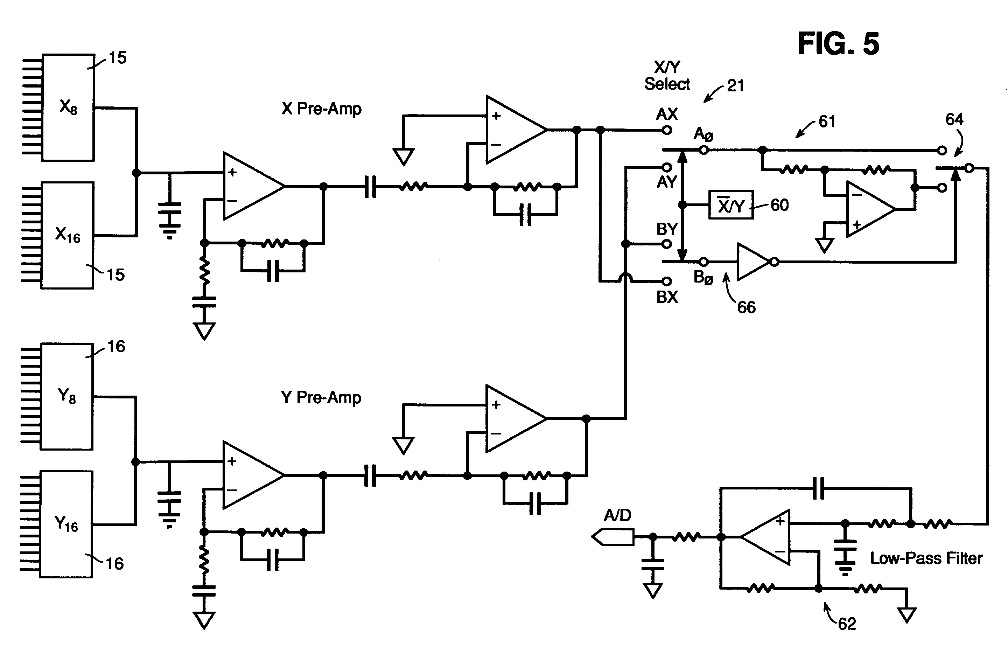

Fig. 5 shows one form of implementation of the Fig. 4 block diagram, which is similar to that of Fig. 2, the same reference numerals being used for similar components. The signals induced in conductors of the X and Y grids are selected by the respective MUXs 15 and 16, pre-amplified, and supplied to an analog switch 21 controlled by signals from the processor (shown by the block 60) such that when the Ax signal from the X grid is used for location determination via branch 61 and low-pass filter 62, to be forward to the A/D converter, the By signal from the Y grid is used via branch 66 to control analog switch 64 to determine when the location signal should be sampled. Conversely, when the Ay signal from the Y grid is used for the location signal, the sync signal Bx is chosen from the X grid.

Fig. 6 illustrates a preferred way of selecting grid conductors for location and sync signals using a signal waveform which represents an integration of sample signals obtained from a typical prior art EM digitizer. The Y axis of the graph represents signal amplitude on a conductor (N), where the conductor locations are represented in the waveform by Xs labelled W3..W10. As is known, where the waveform crosses the time axis is typically used to compute the cursor location. Hence, the signals 70 from wires W6 and W7 are typically used for cursor location. For maximizing noise immunity, strong signals are desired. Hence, the signals induced on conductors W4 or W5, or both, are preferably used for deriving the sync signals.

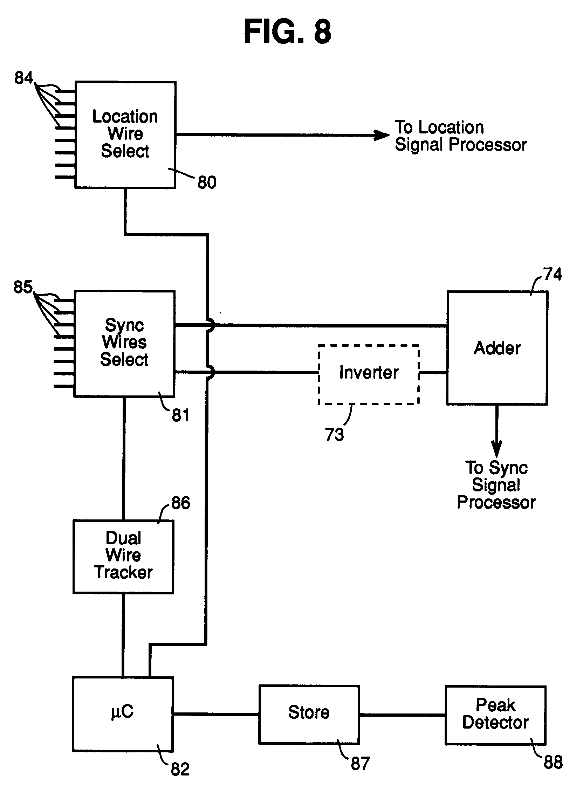

Fig. 8 illustrates this modification, with the block 80 representing conventional tablet grid conductor or grid line selection circuitry for selecting the appropriate grid line during the scanning process to derive the location signal, and block 81 representing a conventional selection circuit for one or more other grid lines for the sync signal, all under the control of a microcontroller 82. This circuitry allows the grid lines 84 connected to the location selector 80 to be, say, the X or Y grid, when the grid lines 85 connected to the sync selector 81 are from the other grid, namely Y or X, in a two grid system. But the same circuitry can be used in a one-grid system, wherein the grid lines 84 and 85 are part of the same grid, but are different, as explained above. Moreover, the same circuitry can be used to select two of the lines, such as represented by W4 and W5 in Fig. 6, and add their signals to further increase signal strength.

Fig. 7 shows a typical response curve to illustrate a further variation. If the signals induced on conductors 4 or 7 are typically used because they provide the largest amplitude signals, circuitry can readily be provided as illustrated schematically in Fig. 8 to invert the phase 73 of one of the signals, and then add them together 74 to provide the sync signal. This would improve the signal to noise ratio by 50 percent.

Moreover, once either of the peaks in Fig. 7 is initially identified, tracking of the sync conductors remains constant. That is to say, the conductors 4 and 7, it will be noted in this instance, are separated by two conductors 5 and 6. It turns out that for any system, regardless of position in the tablet, there will always be the same conductor separation between the conductors with the largest signals. Hence this would simplify the tracking of the selection circuit connections which are selecting two conductors for the sync signals, illustrated at 86 in Fig. 8, and should also aid in providing, if desired, faster track movements.

Fig. 8 also shows a conventional store 87 used to store grid line signal values connected to a conventional peak detector 88 for identifying the conductors W4 and W5 in Fig. 6, or 4 and 7 in Fig. 7.

Reference is made to the referenced patents whose contents are incorporated herein by reference, for more details if needed on processing of the location and sync signals to determine the X-Y coordinates of the pointing device.

While the invention has been described and illustrated in connection with preferred embodiments, many variations and modifications as will be evident to those skilled in this art may be made therein without departing from the spirit of the invention, and the invention as set forth in the appended claims is thus not to be limited to the precise details of construction set forth above as such variations and modifications are intended to be included within the scope of the appended claims.

## Claims

1. A digitizer tablet for determining position coordinates of a cordless pointing device, comprising:
a grid structure associated with a position coordinate,
a cordless pointing device,
means for energizing the pointing device to induce signals in the grid structure,
first means connected to at least one conductor of the grid structure for processing signals induced therein during a certain time interval for determining the position coordinate of the pointing device with respect to said grid structure,
second means connected to at least one other conductor of the grid structure when the first means is connected to said one conductor of the grid structure, for deriving a reference signal from signals induced therein during the same said time interval.

2. The digitizer tablet of claim 1, wherein the reference signal is a sync signal for synchronizing operation of the tablet.

3. A digitizer tablet for determining position coordinates of a cordless pointing device, comprising:
first and second grid structures associated with first and second position coordinates,
a cordless pointing device,
means for energizing the pointing device to induce signals in the first and second grid structures,
first means connected to the first or second grid structures for processing signals induced therein during a certain time interval for determining the position coordinates of the pointing device with respect to said first or second grid structures,
second means connected to the second grid structure when the first means is connected to the first grid structure, or to the first grid structure when the first means is connected to the second grid structure, for deriving a reference signal from signals induced therein during the same said time interval.

4. The digitizer tablet of claim 3, wherein the first grid structure is oriented in the X direction, and the second grid structure is oriented in the Y direction.

5. The digitizer tablet of claim 4, wherein the reference signal is a sync signal for synchronizing operation of the tablet.

6. The digitizer tablet of claim 5, wherein the first means comprises means for scanning the conductors of a grid structure.

7. The digitizer tablet of claim 6, further comprising means for using the sync signal to time the scanning of the conductors of a grid structure.

8. The digitizer tablet of claim 5, wherein the first means comprises sample and hold circuits.

9. The digitizer tablet of claim 8, further comprising means for using the sync signal to time the activation of the sample and hold circuits.

10. The digitizer tablet of claim 3, wherein the second means comprises signal processing circuits for the reference signal.

11. The digitizer tablet of claim 10, further comprising a switch for connecting the second grid structure to the sync signal processing means when the first grid structure is connected to the location signal processing means.

12. The digitizer tablet of claim 10, further comprising a switch for connecting the first grid structure to the sync signal processing means when the second grid structure is connected to the location signal processing means.

13. The digitizer tablet of claim 3, further comprising means for changing the grid portions from which the reference signal is derived in response to the signal level of the reference signal.

14. The digitizer of claim 13, wherein the means for changing changes the grid conductors when the reference signal falls below a threshold value.

15. The digitizer of claim 3, further comprising third means connected to the second means for deriving the reference signal from grid conductors having the highest induced signals therein.

16. The digitizer of claim 15, wherein the third means comprises means for connecting to two grid conductors.

17. The digitizer of claim 15, wherein the third means further comprises an adder.

18. The digitizer of claim 15, wherein the third means further comprises an inverter.

19. The digitizer of claim 15, wherein the third means further comprises means for connecting to two grid conductors with a constant conductor spacing.
